# EUROPEAN PATENT SPECIFICATION

(11) **EP 3 095 668 B1**
(45) Date of publication and mention of the grant of the patent: **25.07.2018**
(21) Application number: 16169383.3
(22) Date of filing: 12.05.2016
(51) Int. Cl.: B62B 3/02

(54) **COUPLING DEVICE FOR CLEANING TROLLEYS**
KOPPEL-VORRICHTUNG FÜR REINIGUNGSWÄGEN
DISPOSITIF D'ACCROCHAGE POUR DES CHARIOTS DE NETTOYAGE

(30) Priority: 19.05.2015 IT UB20150642
(43) Date of publication of application: 23.11.2016
(73) Proprietor: TTS Cleaning S.r.l., 35010 Santa Giustina in Colle (PD) (IT)
(72) Inventor: Zorzo, Renato, 35010 Onara di Tombolo (IT)

(56) References cited:
- US-A- 1 610 902
- US-A- 4 811 965
- US-A1- 2010 109 268

## Description

The subject of this invention relates to a device for coupling cleaning trolleys.

### Prior art

It is well known the lengths manufacturers will go to in order to satisfy their customers by providing them with a personalised response to their needs both in the establishment of the initial encounter as well as during the continuance of this collaboration.

The cleaning market, in particular those where cleaning must be carried out with the aid of a trolley, tends to be extremely varied and diversified.

For this reason, manufacturers create and keep a catalog of countless numbers of variants of trolleys to try to respond precisely to the needs of both its existing customers as well as potential customers.

However, this task is almost impossible since there are many such requests.

A recent trend provides that the trolleys can be put together in a modular fashion, with elements that instead of being configured as tubular elements, rather take on a flat form as large as a reference wall. With such a system, the various manufacturers have developed a modular system of trolleys that can be created and configured according to the expectations and needs of the various customers.

The structure of said modular trolleys generally consists of a base on which are fixed one or more uprights, at some distance from each other, and at the top provided with, or joined by, an upper element. Each of the various components is shaped and configured to be able in turn to be a support for various equipment or other components. For example, for a trolley comprising two uprights, between them, spaced apart at a fixed distance, at the bottom of the base and at the top of the upper element, shelves, drawers and so on are added for the various functions and/or requirements.

Generally the basic model is a trolley with wheels selected at will by users depending on their needs, where the wheels could for example have different diameters.

Inasmuch as manufacturers are trying to persuade their customers to purchase a system that is as complete as possible, and as far as customers reasonably provide for their own needs, very often these provisions prove to be unsatisfactory, with the desire to complete their initial purchase with accessories or other modules. However this sometimes requires a fresh investment in a new trolley, expanded according to current requirements.

For example, customers want to own a cleaning system that uses trolleys that can easily adapt to their cleaning requirements, which requires both a simplified and a more complete trolley during the same day.

To meet this demand, manufacturers have formulated a proposal for additional or supplementary modules that for various reasons have proven to be somewhat limited.

In fact, some manufacturers have simply provided an additional module to be attached to the basic module of the trolley in a fixed and irreversible manner. This may well respond to the increased needs of the customer, however it is not flexible enough, forcing the operator to use such a trolley, where the basic model is increased by an additional module, that is very often over-sized and only sometimes meeting the requirements of the work.

Other manufacturers offer additional modules that join to the basic module by means of connections that employ one or more protruding pins to be solidly inserted within one or more bushes or seats of each part, to the add-on module and to the basic module.

An example of said connection is shown in US4811965.

Such a system may be adequate only in limited circumstances, especially for light and small add-on modules, since they force the operator to completely lift the additional module off the floor to insert the corresponding cantilevered pin, with which it is fitted, into the relative coupling bush.

It is clear that for additional modules that are heavier this system cannot be adopted.

Other devices connecting additional modules to basic cleaning trolley modules are substantially limited by the fact that they are virtually irreversible, or by the fact they are difficult and complicated to operate or by the fact that they must be already anticipated in the process of the initial purchase the basic module.

And finally, we should keep in mind that sometimes the customers themselves, already in possession of the specific equipment, ask the manufacturer for away to be able to join the same seamlessly so that it can be operated and managed by a single person.

In such cases, it is evident that the rigid connection in a single body, for example, of two trolleys could make it impossible to manage them at the first difference in floor level that is encountered.

For these reasons, customers are often reluctant to purchase this additional equipment, so as not to find themselves with a cleaning trolley that is unwieldy and cumbersome.

At the moment there is no coupling device that can overcome all the drawbacks of the prior art and that meet customers' needs of ease of connection and simple management.

In the following discussion we can refer without distinction to any cleaning trolley whatever its configuration, for example with one or more uprights and whatever the lower structure may be, for example a basic or a wheeled module, all falling within the scope of cleaning trolleys that can be joined together with the coupling device of the invention.

### Scope of the invention

The object of this invention is to make available a coupling device for cleaning trolleys that can overcome all the drawbacks of the prior art outlined above.

A further object of this invention is to make available a coupling device for cleaning trolleys that can connect at least two cleaning trolleys.

An even further object of this invention is to make available a coupling device for cleaning trolleys that can connect two trolleys or two cleaning trolley modules in an easily reversible manner.

It is clear that the connection of further trolleys, besides the first connection, can be configured as a simple repetition of the first or previous connection on another free side of the first or of the second trolley, that have already been joined together.

An important object of this invention is to make available a coupling device for cleaning trolleys that provides the trolleys joined together with a solid connection, but also one that is not fixed and rigid.

An obvious object of this invention is to make available a coupling device for cleaning trolleys that allows for easy connection and disconnection with just one control, or after a manual intervention by the operator

An important object of this invention is to make available a coupling device for cleaning trolleys that allows the trolleys themselves to keep their original provisions and/or accessories.

An equally important object of this invention is to make available a coupling device for cleaning trolleys that does not limit the maneuverability of the trolleys themselves.

### Explanation of the invention

These aims and those that will be more fully apparent in the remainder of this description are obtained from a coupling device for cleaning trolleys that includes at least a male element and a second female element that can be connected together permanently on a outer perimeter of said trolleys, where said elements, male and female, connect to each other to hold at least two of said cleaning trolleys together, where the male element of the coupling device, attached to a first trolley, in a position that corresponds to the female element, fixed to the second trolley, and where said male element has at least one overhanng with an end enlargement and where said female element has a moving part that can assume an initial rest position offset from said male element and a second work position joined to said male element, with said mobile part cooperating with said end enlargement to prevent the shifting away of said two cleaning trolleys, so that said connection between the male and female elements of the connection device allows at least some degree of freedom between them, along the vertical axis, allowing two trolleys to connect keeping them at a roughly fixed distance relative to the horizontal axis, but being able to move reciprovally along the vertical axis.

In particular the female element, and more particularly said movable part of the movable element, interacts with the end enlargement of the male element overhang so as to, in the first situation or the rest condition, allow the overcoming or the crossing freely and unhindered of the movable part by the male element, and in the second situation or work condition, to prevent its return for disconnection, with a direction opposite to that of the connection, however, allowing, in this second situation, a freedom of movement between the male element and female element, with a direction of movement perpendicular to the direction of the disconnection movement.

### Advantageous features of the invention

Advantageously said connection is possible with an substantial misalignment of position between the male element and the female element of the coupling device.

Advantageously at least one of said elements is configured in a self-centering manner in order to favour the mutual connection with the centering during the approach, having either the seat with inclined surfaces of the female element and/or the overhang of the male element, or its end enlargement, a tapered profile.

Advantageously, at least said first rest position of the movable part of the female element is maintained by a first raised part or protrusion which creates an interference to the movement, favouring the approach phase and connection between the trolleys, without which the movable part interferes with the overhang or the enlargement of the overhang.

Advantageously, at least said second work position of the movable part of the female element is maintained by a second raised part, as a safety element, which interferes with the movement, preventing accidental disconnections of the coupling device.

Advantageously, said male element comprises a C-shaped or T-shaped profile, with the cavity arranged along a vertical axis.

Advantageously, said female element comprises a lever, preferably hinged, and/or hinged at the top, and/or hinged at the horizontal axis of rotation.

Advantageously, said male element and/or said female element of the coupling device comprises at least one upper and/or lower strike to limit the travel of the movement along the vertical axis of the degree of freedom of the binding connection between said elements.

Advantageously, said female element comprises a cavity, or a hollow housing, which can accommodate said male element or part of it, inside of which at least the overhang or at least the end enlargement is retained during the connection with the movable part.

Advantageously, the height of said hollow housing and/or the distance between the upper and lower strike allows different trolleys to be connected compensating for any differences, but limited, in the size of the diameter of the wheels with which they are fitted or in any event compensating for the variation in height to which the respective connecting elements are subjected on the perimeter of the trolleys, allowing the connection to take place.

Advantageously, said connection between the male element and female element is slightly loose, allowing small rotations between the two elements and consequently allowing small rotations between the two connected trolleys in order to be able to steer to overcome rough or uneven areas or inclines in the floor.

Advantageously, said male and female elements are fixed in a solid but removable manner on the perimeter of said trolleys, preferably in pairs spaced apart and possibly fixed in pairs in mirror-like fashion with respect to a vertical symmetry axis or in any case fixed at the top and bottom to the vertices of a polygon, and preferably a tetragon.

Equally advantageously, in the case of the installation of 2 or 4 devices arranged in a symmetrical and/or mirrored manner with respect to the vertical axis for the connection of two trolleys, the movement operations of the mobile part take place by operating from the outside of the perimeter profile composed of the two elements or the two trolleys.

Profitably, the thickness created by said coupling devices, corresponding to the distance of the constraint between two trolleys in a horizontal plane, corresponds or is greater than the overall size of any handles of which the trolly has at least one, providing the easy installation and dismantling of the restraint without any prior preparation of the trolleys to be coupled, as well as the immediate availability of both trolleys once the constraint is removed.

It is useful that the thickness created by said devices, corresponding to the distance of the constraint between two trolleys, is equal to or greater than the overall size of the two wheels, adjacent but with different bases, in alignment, the two trolleys being able to change direction and be moved without any collision between the underlying wheels of different bases.

It is very useful that both the installation and the removal of each element that make up the device can be installed and removed without tools, but carried out manually by the operator, since each element is equipped with, in one or more free sides with respect to that of the connection, a striker with a stop which connects to or is inserted, threaded, into the respective grooved couplings on the perimeter walls of a standard trolley, or present on the upright, until the overcoming of an interference, which prevents its accidental extraction, where said interference is limited or rendered ineffective as a result of the maneuver of the operator who operates a special and pre-arranged release device which frees the elements to disengage or to slide in reverse on the grooved guides until they are free.

These and other objects are all achieved by the coupling device for cleaning trolleys that is the object of this invention according to the attached claims.

### Brief description of the drawings

The technical characteristics of the invention, according to the aforesaid aims, can be clearly seen in the content of the claims reported below, and its advantages will become more readily apparent in the detailed description that follows, made with reference to the accompanying drawings, which illustrate a preferred embodiment, purely exemplary and not limiting, in which:

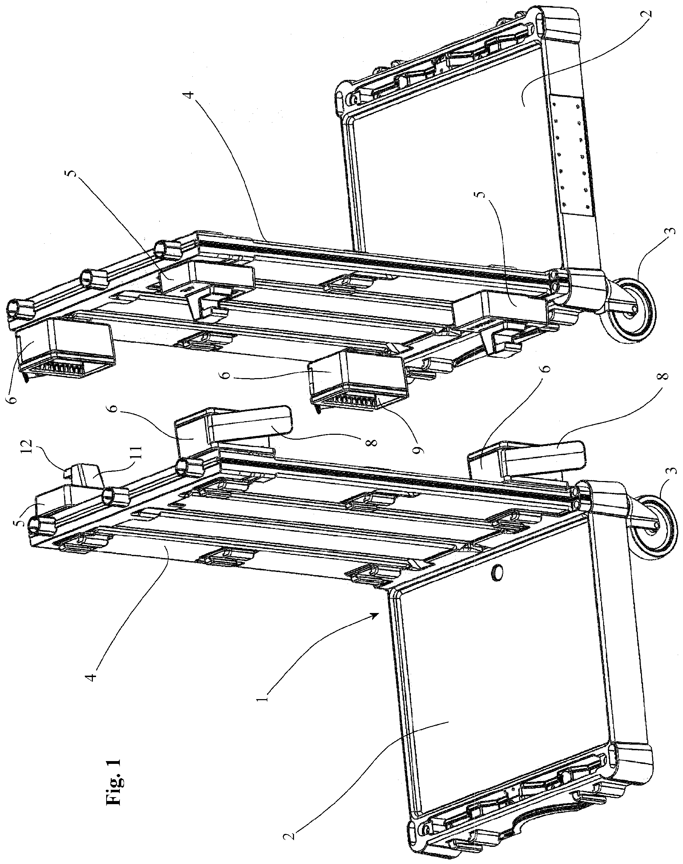

Fig. 1 shows an example of a pair of cleaning trolleys fitted with a base and an upright equipped with the coupling device of the invention; these trolleys are still separated and the various elements of the device have not yet been connected.

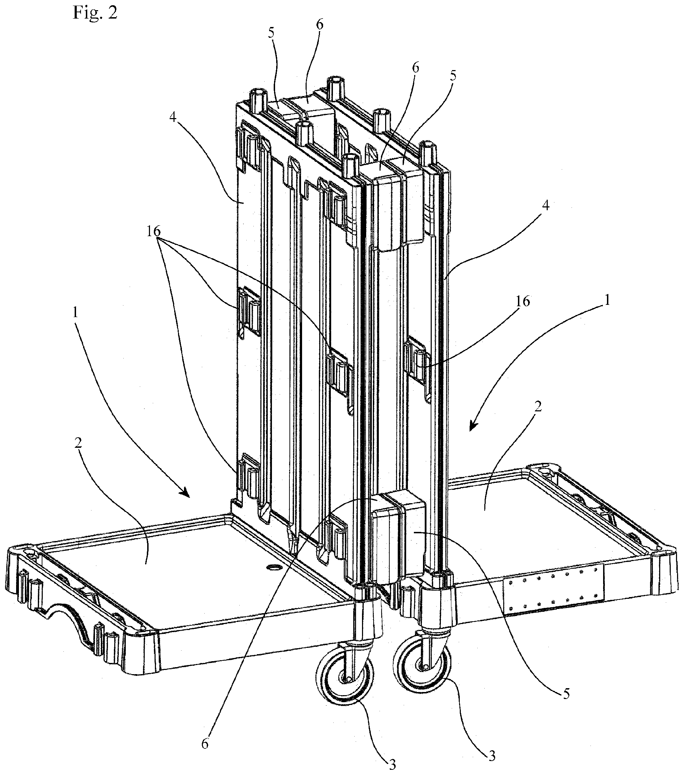

Fig. 2 shows what is set out in Fig. 1 where the two trolleys are connected to one another, having been brought close together and the various elements of the coupling device have been joined.

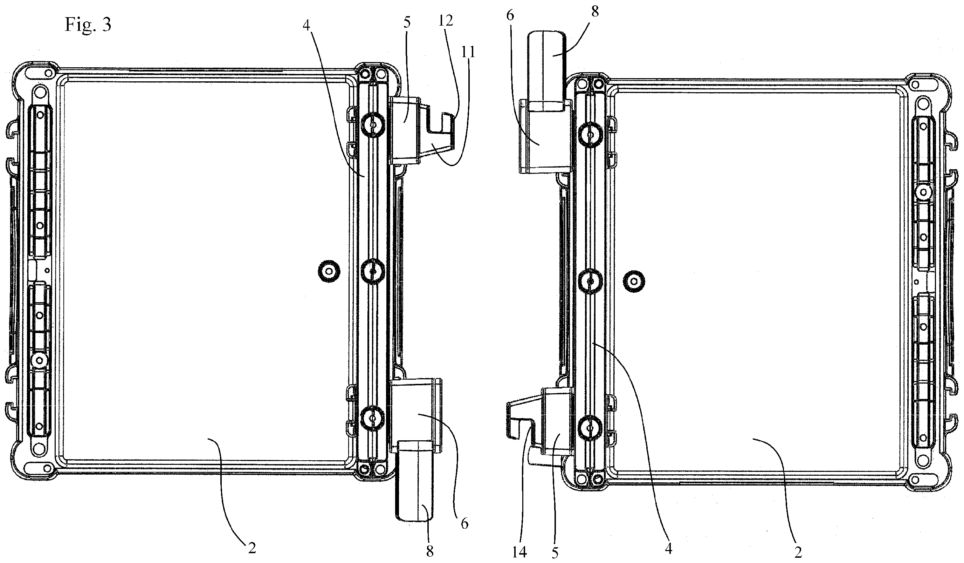

Fig. 3 shows what is set out in fig. 1 according to a plan view from above.

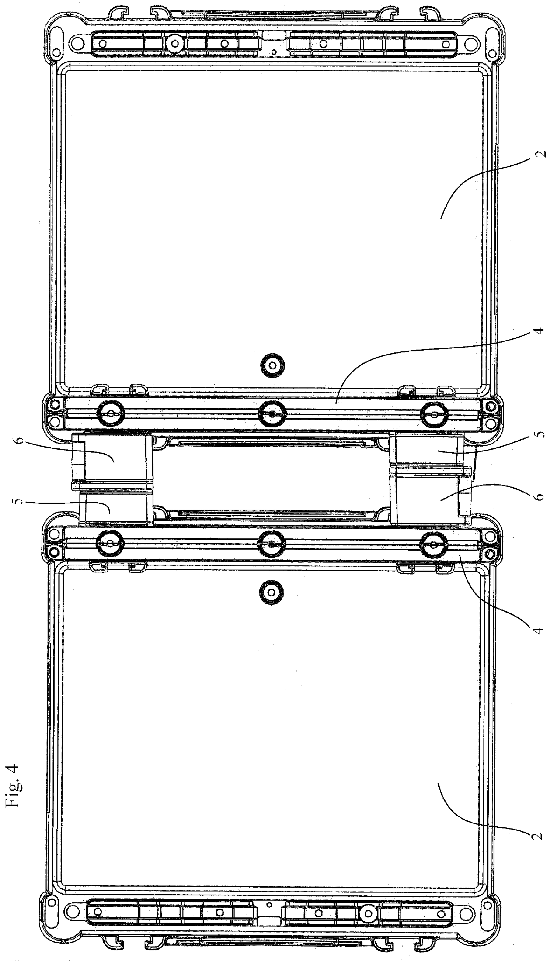

Fig. 4 shows what is set out in fig. 2 according to a plan view from above.

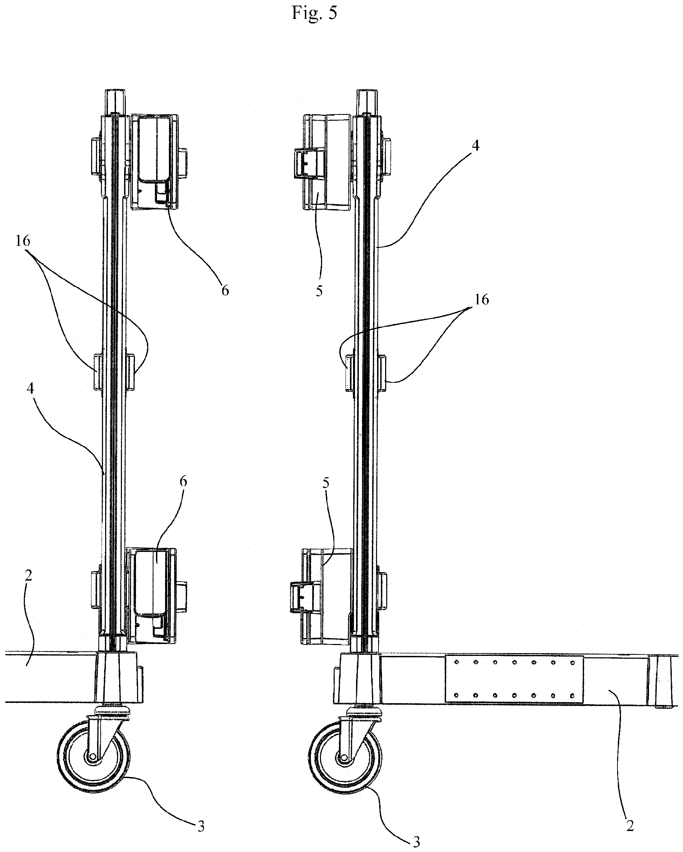

Fig. 5 shows what is set out in fig. 1 according to a plan view from the side.

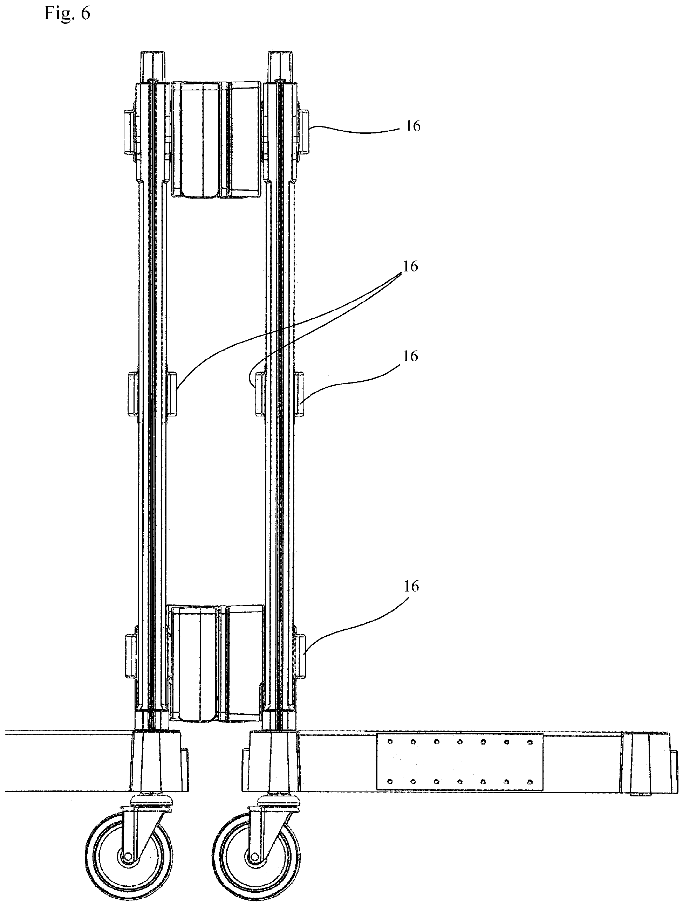

Fig. 6 shows what is set out in fig. 2 according to a plan view from the side.

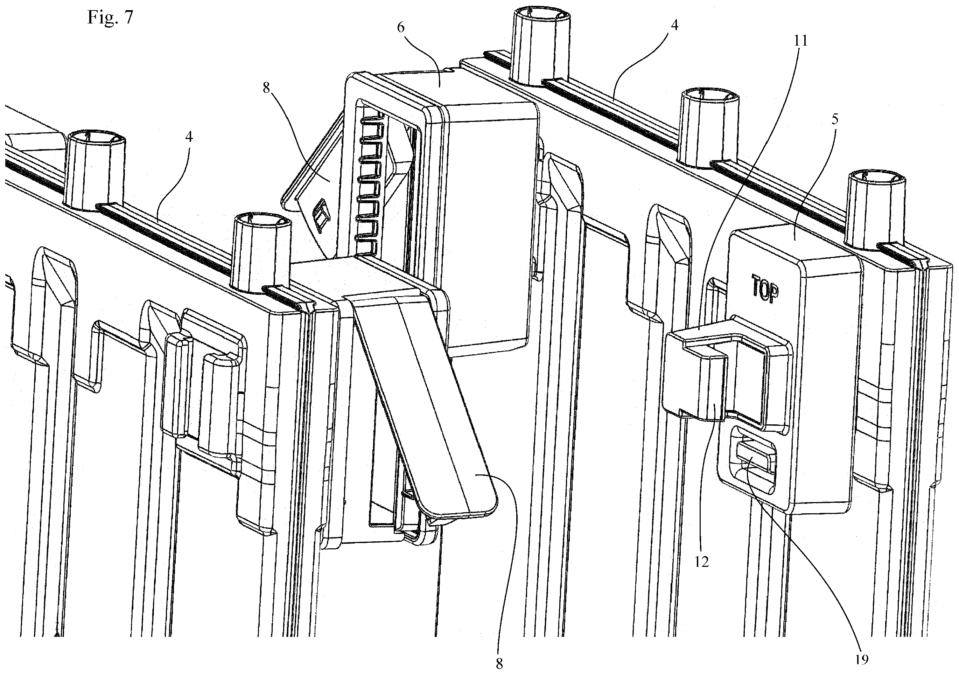

Fig. 7 shows an enlargement of the top part of the uprights of two trolleys equipped with the coupling device that is the object of the invention, with the movable part of the female element in a raised position, ready to be brought close to and connected together.

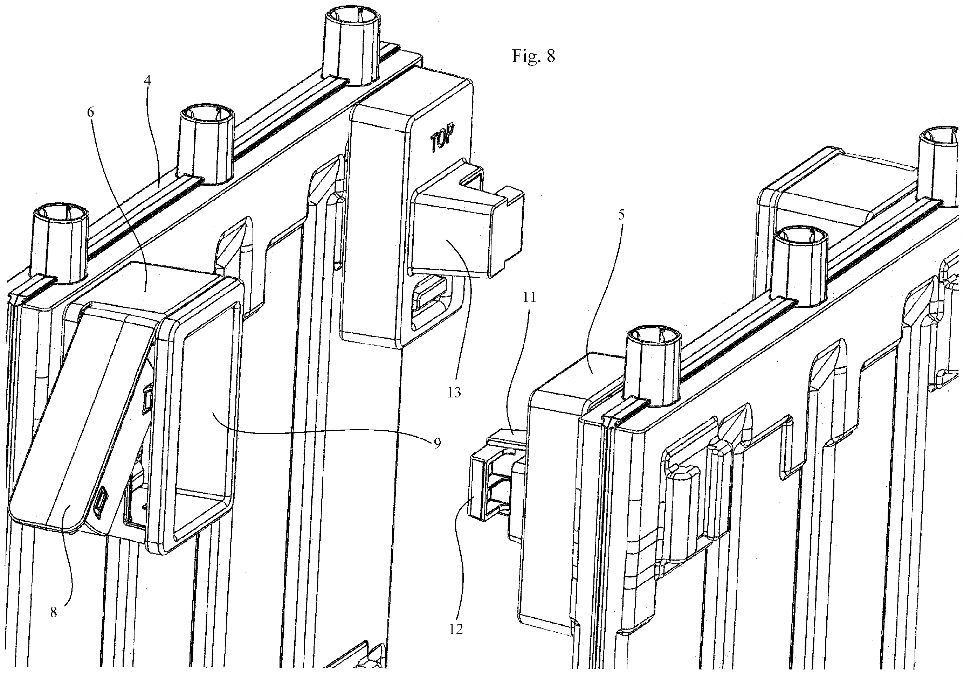

Fig. 8 shows what is set out in fig. 7 from a different perspective view.

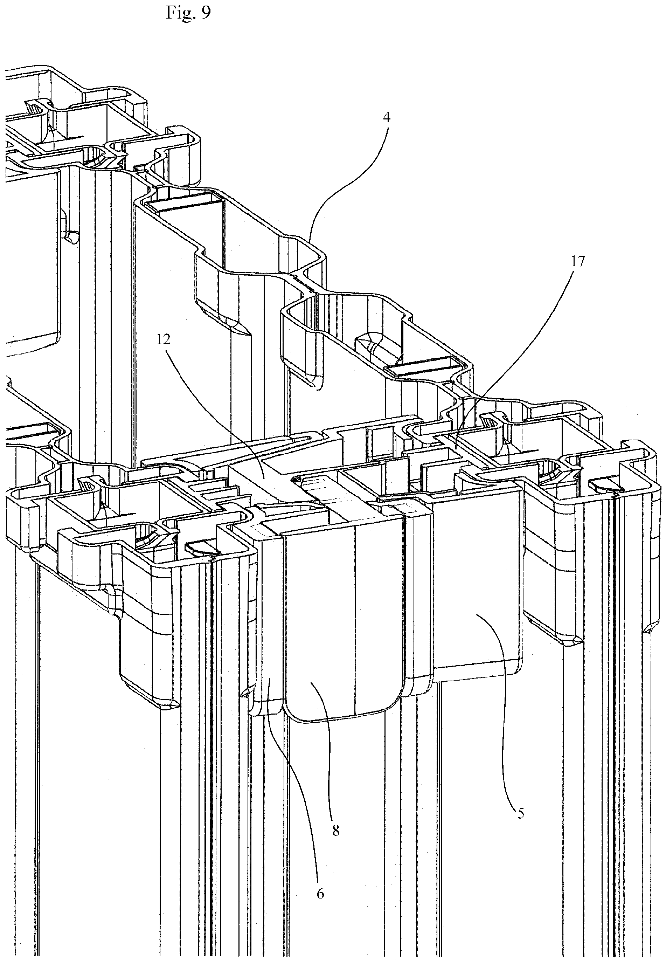

Fig. 9 shows an enlarged and sectioned horizontal plan view, the top part of the uprights of two trolleys fitted with the coupling device of the invention with the trolleys connected to each other.

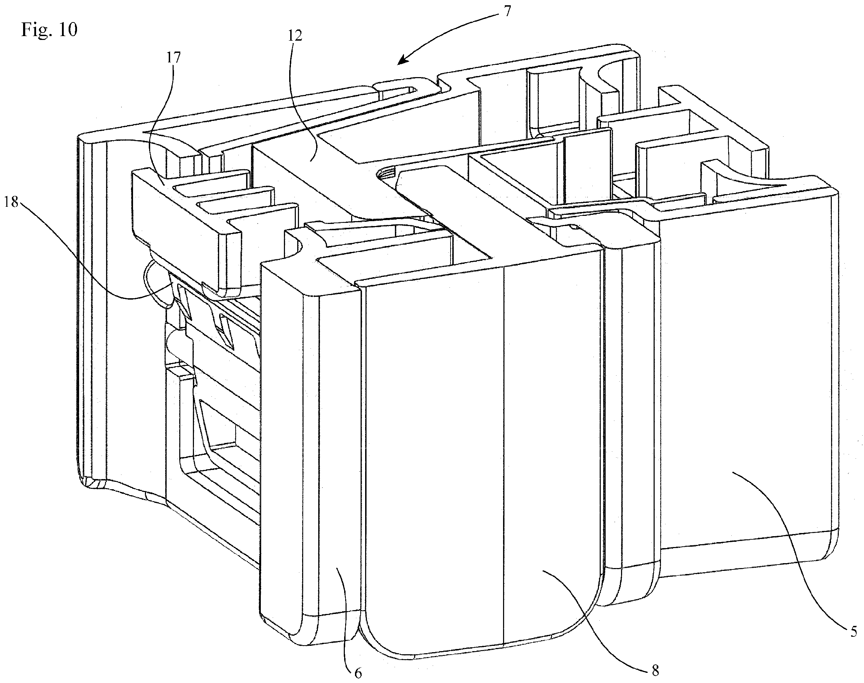

Fig. 10 shows what is set out in fig. 9 without the presence of the two uprights of the two trolleys.

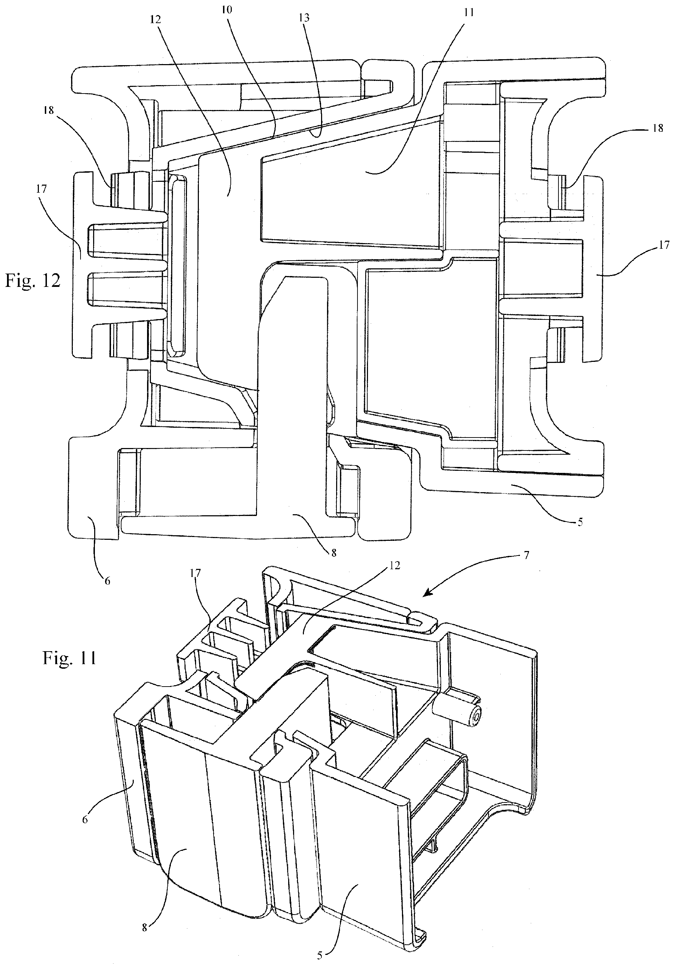

Fig. 11 shows the coupling device from a perspective and sectioned view according to a horizontal plane section, with the male element connected to the female element.
Fig. 12 shows what is set out in fig. 1 according to a plan view from above.

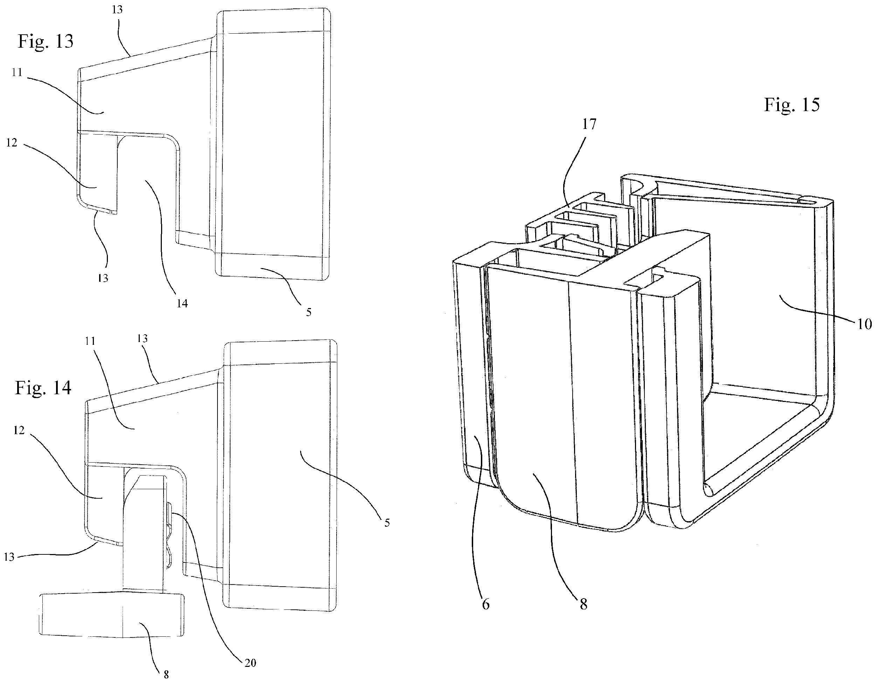

Fig. 13 shows only the male element of the device of the invention according to a plan view from above.
Fig. 14 shows a top plan view only of the male element and only the mobile part of the female element in working condition.
Fig. 15 shows only the female element from a perspective view and in section according to a horizontal plane section.

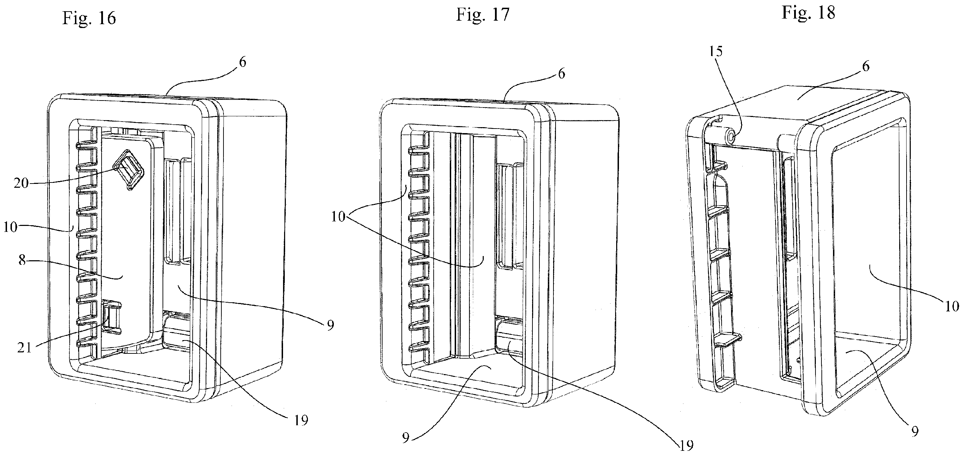

Fig. 16 shows only a perspective view of the female element.
Fig. 17 shows only a perspective view of the female element without the mobile part.
Fig. 18 shows what is set out in fig. 17 from a different perspective view.

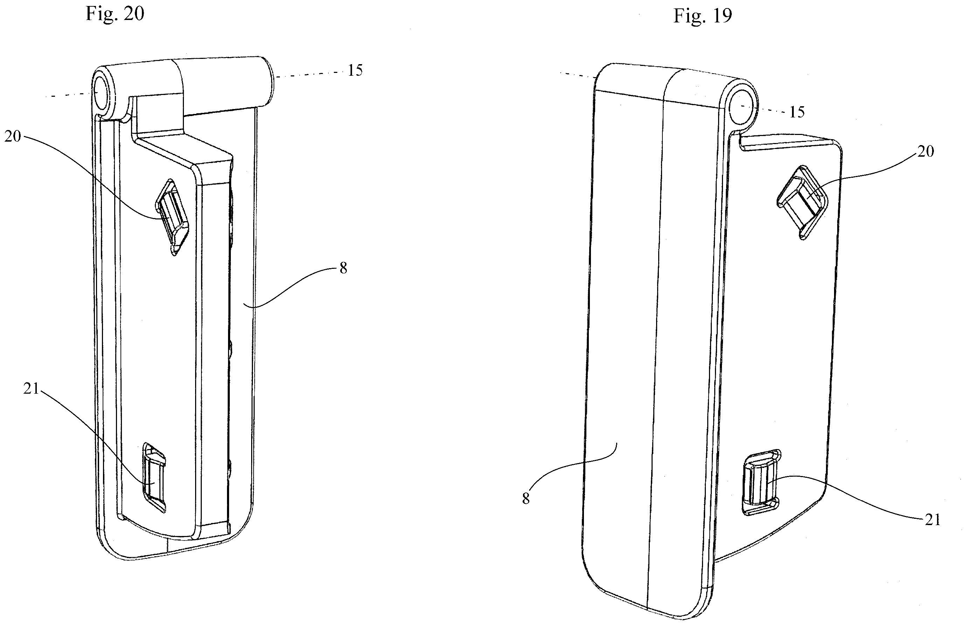

Fig. 19 shows only a first perspective view of the mobile part of the female element.
Fig. 20 shows what is set out in fig. 18 from a different perspective view.

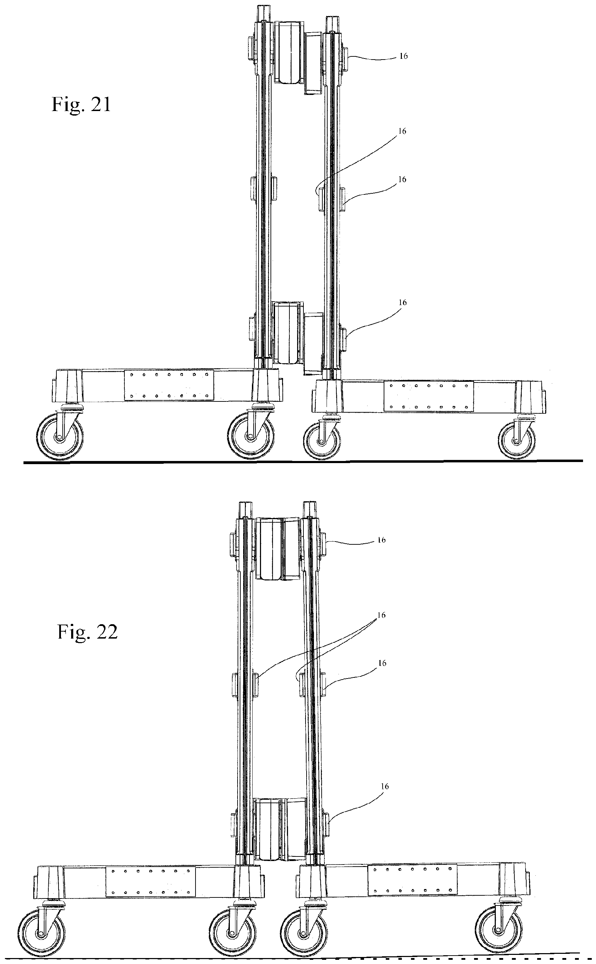

Fig. 21 shows two trolleys connected to each other with the coupling device of the invention, where the trolleys are each fitted with wheels of different diameters, with the coupling device that nevertheless creates the constraint, offsetting this difference in height of the respective connection elements.
Fig. 22 shows two trolleys connected to each other with the coupling device of the invention, which provides a slightly slack constraint in order to allow a reciprocal rotation between the trolleys to adapt to variations in the inclination of the floor or uneven areas.

### Detailed description of an example of a preferred embodiment

With reference to the diagrams, a standard modular trolley 1 is composed of a base 2 equipped with wheels 3 on which are installed uprights 4, joined at the top by an upper element (not shown).

On the outside of the perimeter part, and preferably on the outer surface of the uprights 4, one or more male 5 and/or female 6 elements are fixed, of the coupling device 7 that is the object of the invention.

For the reciprocal constraint between a pair of trolleys 1, a male element 5 is fixed on a first trolley 1, in a position matching that of a female element 6 fixed on a second trolley 1, in such a way that when the two trolleys 1 are brought close together the respective elements, male 5 female 6, of the coupling device 7 can be joined together.

Depending on requirements, there will be only one of these devices 7 or else a pair, preferably arranged in a mirror-like manner with respect to a vertical axis passing through the centre line of the upright 4, or else several devices 7.

The arrangement of the fixing of the coupling devices 7 along the vertical peripheral edge of the uprights 4 is the most convenient for bbeing able to verify the correspondence of approach between trolleys 1 and to actuate the movable part 8 of the female element 6 of the coupling device 7.

In fact, although there are some measures that facilitate the coming together of the male element 5 and the female element 7, the operator must bring together the trolleys 1 quite precisely.

Said self-centering arrangements are configured as or at least the seat 9 of the profiled female element in a self-centering manner with the inclined surfaces 10 or at least the male element 5, and in particular the overhang 11 with an end enlargement 12, profiled in a tapered manner with the converging side walls 13. In fact the male element 5, which is fixed onto the peripheral part of a cleaning trolley 1 comprises an overhang 11, the end of which is enlarged.

In all likelihood it corresponds to a C-profile or a T-profile arranged with the cavity 14 in the vertical.

Therefore at least the vertical side walls 13 profiled in a convergent manner, help the operator in the centering phase during the closing together and connection of the female element 6 with the male element 5.

The female element 6 of the coupling device 7 comprises a seat 9 to be joined at least with the overhang 11 and/or with the thickening 12 of the overhang 11 of the male element 5.

Advantageously, the seat 9 is configured as a window in which at least the side walls are inclined surfaces 10 which help the operator in the centering phase and during the approach and connection of the female element 6 and the male element 5.

To retain and maintain securely joined the connection of the two trolleys 1, after the connection of the male element 5 and the female element 6, a mobile part 8 of the female member 6 is moved to occupy the cavity 14 of the overhang 11 of the male element 5 .

In such a configuration at least the contrary horizontal movement of moving apart of the two trolleys 1 is impeded, which remain bound to each other.

Said moving part 8 preferably assumes the configuration of a lever, with a horizontal rotation axis 15.

Before the male element 5 and 6 female element approach each other, the mobile part 8 is offset or raised to allow that at least the end enlargement 12 brought by the overhang 11 overcomes it.

Then this mobile part 8 is moved or lowered to fit into the cavity 14 between the overhang 11 and the enlargement 12.

The enlargement 12 is then retained within the seat 9 of the female element 6 and prevented from coming out, with a horizontal movement opposite to the connection one, by the presence of the movable part 8 inserted within the cavity 14.

One of the prerogatives of this coupling device 7 is the fact that the two elements, male 5 and female 6, can reciprocally move during their connection with a movement perpendicular to that of retention movement, in particular a vertical movement.

In fact, the movable part 8 inserted into the cavity 14 of the overhang 11 prevents the end enlargement 12 and the overhang 11 from coming out of the seat 9 of the female element 6, but allows it to slide along its walls or inclined surfaces 10.

This movement has limited travel in the planning stage with end stops that can be applied either to the male element 5 or the female element 6.

In this particular embodiment this travel is limited by the height of the seat 9 of the female element 6 within which the overhang 11 and/or the end enlargement 12 enters.

Indeed either the upper wall or the lower wall of said seat 9 act as a stop against the corresponding upper and lower walls of the overhang 11 or the enlargement 12.

This travel is very useful for two main reasons. In fact the two standard trolleys 1 to be connected, albeit structured with the same base 2 and the same uprights 4, and therefore providing the same points of application for the elements of the coupling device 7, can be fitted with wheels 3 with a different diameter. In this case the height of the seat 9 of the female element 6 allows to you to compensate for this different size of the diameter of the wheels 3 of the two trolleys 1, and equally allows the insertion of the male element within the relative seat 9, to be retained by the mobile part 8.

A further reason is the fact that two trolleys bound together might come upon an uneven floor. In this eventuality, it allows the two trolleys 1 to come to the height necessary for always proceeding resting on the floor.

Moreover it must be said that for small raised areas or for inclinations of the floor it is envisaged that the connection between the male element 5 and the female element 6 is not overly precise, but allows some adaptation, or slack space.

In this way, during an eventual movement of the trolleys 1, with the presence of these raised areas or floor inclinations, it allows the connection between the two trolleys 1 to adapt in a longitudinal manner, rotating reciprocally and inclining to deal with this.

The installation of said elements 5, 6 of the coupling device 7 on the upright 4 is extremely simple, and can be carried out manually very quickly and easily by the operator without the need for special tools.

In fact said uprights already possess suitable grooved couplings 16 for the installation of various cleaning accessories.

The male and the female elements are threaded onto the grooved couplings 16, sliding the surface opposite to that of the connection, which has end stops that can connect with the grooved couplings 16. The sliding movement on such couplings 16 of the end stops 17 terminates with a stop and with the overcoming of an initial interference composed of an interference tooth 18. This interference precludes an easy extraction at the end of the coupling operations.

In order to be able to easily, and without any special tools, remove the various elements 5, 6 from the upright 4 the reverse operation is carried out opposite to the insertion movement. To this end, to cancel the action of the interference of the interference tooth, from the outside the operator operates an elastic device, configured as a hinged button 19 which acts in such a way that it moves the interference element leaving the lever free for the sliding of the element 5, 6 in question to be removed from the upright 4.

The movement of the movable part 8 of the female element 6 is limited by at least one protrusion 20.

In fact, to allow the lever hinged around a horizontal axis of rotation 15 to maintain its external rest position, or partially external, with respect to the female element 6, on the lever itself there is a protrusion 20 or an notch which maintain this position by preventing the natural descent of the lever due to gravity to occupy a position inside said female element 6.

In this way the operator, by easily using one or more levers of the female element 6, prepares the connection of the trolleys 1 bring them closer together and concluding the connection operation with a rotation movement of the lever after overcoming the aforementioned interference 20.

This actuation of the movable parts 8 is always very easy for the operator, having close by the relative elements near the external profile, and specifically the vertical edges, of the uprights 4. The operator being able, then, to directly operate the lever of the moving part 8 of the female element 4.

An eventual safety element 21 may be provided on the movable part 8 to prevent accidental movements of the movable part 8, where the safety element is engaged and creates friction, or the overcoming of an initial interference, in the final part of the movement of the movable part 8 within the cavity 14.

Finally, said elements 5, 6 insert a small distance between the two connected trolleys 1.

This distance is needed in order to be able to have any handles installed on the upper part of the uprights 4, or other equipment present, without these colliding or interfering with the adjacent trolley 1.

Furthermore, this distance is useful in order to prevent the wheels 3 of the ends of the adjacent base 2 of different trolleys 1, but bound together, from interfering.

## Claims

1. Coupling device for cleaning trolleys comprising at least a first male element (5) and a second female element (6) that can be connected to each other, joined in a fixed manner on the outer perimeter of said trolleys (1), where said elements, male (5) and female (6) couple to one another to retain at least two of said cleaning trolleys (1), where the male element (5) of the coupling device (7), fixed to a first trolley (1), in a position corresponding to the female element (6), fixed to the second trolley (1), and where said male element (5) has at least one overhang (11) with an end enlargement (12) and where said female element (6) has a mobile part (8) capable of taking on a first rest position offset from said male element (5) and a second work position connected to said male element (5), with said mobile part (8) cooperating with said end enlargement (12) to prevent drifting due to the moving apart of said two cleaning trolleys (1), **characterised by** the fact that said constraint between the male element (5) and the female element (6) of the coupling device (7) provides a degree of freedom between them, along the vertical axis, allowing the two trolleys (1) to be connected keeping them at a distance that is more or less fixed with respect to the horizontal axis, but being able to move reciprocally along the vertical axis.

2. Coupling device for cleaning trolleys according to claim 1, **characterised by** the fact that the female element (6), and especially said mobile part (8) of the female element, interacts with the end enlargement (12) of the overhang (11) of the male element (5) so that, in the first rest situation or condition, it allows the mobile part (8) to be freely overcome or crossed without any obstruction from the male part (5), and in the second work situation or condition, it prevents the return movement to disconnect, in the opposite direction to the connection direction, however allowing, in this second situation, free movement with regard to the male element (5) and the female element (6), with a direction of movement that is orthogonal to the direction of the disconnection movement.

3. Coupling device for cleaning trolleys according to claim 1, **characterised by** the fact that said coupling is possible with an appreciable misalignment of position between the male element (5) and the female element (6) of the coupling device (7).

4. Coupling device for cleaning trolleys according to claim 1, **characterised by** the fact that at least one of said elements (5, 6) is configured in an auto-centring way to favour the reciprocal joining with centring during the approach, where either the female element (6) has a housing (9) with inclined surfaces (10) to join with the male element (5), or else the overhang (11) of the male element (5), or its end enlargement (12), of the side walls (13) with a tapered profile.

5. Coupling device for cleaning trolleys according to claim 1, **characterised by** the fact that at least said first rest position of the mobile part (8) is upheld by a protrusion (20) that interferes with the movement, favouring the approaching and connection phase of the trolleys, without the mobile part (8) interfering with the overhang (11) or the end enlargement (12) of the overhang (11).

6. Coupling device for cleaning trolleys according to claim 1, **characterised by** the fact that at least said second work position of the mobile part (8) is maintained by a safety element (21) that interferes with the movement, thus preventing accidental disconnections of the coupling device (7).

7. Coupling device for cleaning trolleys according to claim 1, **characterised by** the fact that said male element (5) comprises a C or a T-shaped profile with the cavity (14) arranged along a vertical axis.

8. Coupling device for cleaning trolleys according to claim 1, **characterised by** the fact that said mobile part (8) comprises a lever, preferably of the hinged variety, and/or hinged at the top, and/or hinged to the horizontal rotation axis (15).

9. Coupling device for cleaning trolleys according to claim 1, **characterised by** the fact that said male element (5) or said female element (6) of the coupling device (7) consist of at least a top and/or lower stop to limit the travel of the movement around the vertical axis of the degree of freedom of the bond between said elements (5, 6).

10. Coupling device for cleaning trolleys according to claim 1, **characterised by** the fact that said female element (6) consists of a hollow housing (9) capable of holding said male element (5) or part of it, inside which at least the overhang (11) or at least the end enlargement (12) is retained during the coupling with the mobile part (8).

11. Coupling device for cleaning trolleys according to claim 1, **characterised by** the fact that the height of said concave housing (9) or the distance between the top and bottom stops allow also between different trolleys (1) to be connected, offsetting any eventual small differences in the sizes of the diameter of the wheels (3) that they are fitted with, or in any event compensating for the variation in position at which the respective connecting elements (5, 6) are arranged on the perimeter of the trolleys (1), thereby allowing them to connect.

12. Coupling device for cleaning trolleys according to claim 1, **characterised by** the fact that said connection between the male element (5) and the female element (6) is slightly loose allowing modest rotations relative to the two elements (5, 6) and consequently allowing modest rotations between the two trolleys (1) that are connected, in order to turn to overcome rugged or uneven ground or slopes in the floor.

13. Coupling device for cleaning trolleys according to claim 1, **characterised by** the fact that said male (5) and female (6) elements are fixed in a solid but removable manner on the perimeter of said trolleys (1), preferably and eventually secured as pairs spaced in a mirror-like manner with respect to a vertical symmetrical axis or in any event fixed at the top and bottom to the tops of a polygon and preferably a tetragon.

14. Coupling device for cleaning trolleys according to claim 1, **characterised by** the fact that in the event of the installation of 2 or 4 devices arranged in a symmetrical and/or mirror-like manner to the vertical axis for the connection of the two trolleys (1), the operations for moving the mobile part (8) take place working from the outside of the perimeter profile composed of the two elements (5, 6) or by the two trolleys (1).

15. Coupling device for cleaning trolleys according to claim 1, **characterised by** the fact that both the installation and the removal of each element, male (5) and female (6) that make up the connection device (7) can be installed and removed without tools, and in a manual way by the operator, since each element, male (5) and female (6)is equipped, in one or more free sides with respect to the connecting side, with a stop that joins or is inserted in the respective grooved couplings (16) that the upright (14) is fitted with, or in any event present on the perimeter walls of standard trolley (1) until the overcoming of an interference of an interference tooth (18), that prevents an accidental extraction, since said interference is limited or rendered unimportant after the opening manoeuvre by the operator that acts on a specific release device that free the male elements (5) and the female elements (6) to release themselves or slide in manner opposite on the grooved couplings (16) until they free themselves.

## Patentansprüche

1. Kupplungsvorrichtung für Reinigungswagen bestehend aus mindestens einem ersten Einsteckelement (5) und einem zweiten Aufnahmeelement (6), die fest miteinander am Außenumfang der Wagen (1) verbunden werden können, wobei die Einsteck- (5) und Aufnahmeelemente (6) miteinander koppeln, um mindestens zwei der Reinigungswagen (1) zu halten, wobei das Einsteckelement (5) der Kupplungsvorrichtung (7), an einem ersten Wagen (1) befestigt, in einer Position, die dem Aufnahmeelement (6) entspricht, an dem zweiten Wagen (1) befestigt ist und wobei das Einsteckelement (5) mindestens einen Überhang (11) mit einer Endvergrößerung (12) aufweist und wobei das Aufnahmeelement (6) einen beweglichen Teil (8) aufweist, der in der Lage ist, eine erste Ruheposition, die mit dem Einsteckelement (5) nicht verbunden ist und eine zweite Arbeitsposition, die mit dem Einsteckelement (5) verbunden ist, anzunehmen, wobei der bewegliche Teil (8) mit der Endvergrößerung (12) zusammenwirkt, um ein Auseinanderdriften aufgrund des Auseinanderbewegens der beiden Reinigungswagen (1) zu verhindern, **gekennzeichnet durch** die Tatsache, dass die Beschränkung zwischen dem Einsteckelement (5) und dem Aufnahmeelement (6) der Kupplungsvorrichtung (7) einen Freiheitsgrad zwischen ihnen entlang der vertikalen Achse bereitstellt, der ein Verbinden der beiden Wagen (1) ermöglicht, wobei sie in einem Abstand gehalten werden, der bezüglich der horizontalen Achse mehr oder weniger fest ist, Sie sich jedoch entlang der vertikalen Achse hin- und her bewegen können.

2. Kupplungsvorrichtung für Reinigungswagen nach Anspruch 1, **gekennzeichnet durch** die Tatsache, dass das Aufnahmeelement (6), und insbesondere der bewegliche Teil (8) des Aufnahmeelements, mit der Endvergrößerung (12) des Überhangs (11) des Einsteckelements (5) zusammenwirkt, sodass es in der ersten Ruhesituation oder in dem ersten Ruhezustand ermöglicht, dass der bewegliche Teil (8) ohne Behinderung durch den männlichen Teil (5) frei überwunden oder überquert werden kann und verhindert in der zweiten Arbeitssituation oder in dem zweiten Arbeitszustand, dass die Rückstellbewegung in die entgegengesetzte Richtung zur Verbindungsrichtung unterbrochen wird, jedoch in dieser zweiten Situation eine freie Bewegung in Bezug auf das Einsteckelement (5) und das Aufnahmeelement (6), mit einer Bewegungsrichtung, die orthogonal zur Richtung der Trennbewegung ist, erlaubt.

3. Kupplungsvorrichtung für Reinigungswagen nach Anspruch 1, **gekennzeichnet durch** die Tatsache, dass die Kopplung mit einer nennenswerten Fehlausrichtung der Position zwischen dem Einsteckelement (5) und dem Aufnahmeelement (6) der Kupplungsvorrichtung (7) möglich ist.

4. Kupplungsvorrichtung für Reinigungswagen nach Anspruch 1, **gekennzeichnet durch** die Tatsache, dass mindestens eines der Elemente (5, 6) selbstzentrierend konfiguriert ist, um die wechselseitige Verbindung mit der Zentrierung während der Annäherung zu begünstigen, wo entweder das Aufnahmeelement (6) ein Gehäuse (9) mit geneigten Flächen (10) aufweist, um sich mit dem Einsteckelement (5) oder aber dem Überhang (11) des Einsteckelements (5) oder dessen Endvergrößerung (12), der Seitenwände (13) mit einem verjüngten Profil zu verbinden.

5. Kupplungsvorrichtung für Reinigungswagen nach Anspruch 1, **gekennzeichnet durch** die Tatsache, dass zumindest die erste Ruheposition des beweglichen Teils (8) durch einen die Bewegung störenden Vorsprung (20) aufrechterhalten wird, der die Annäherungs- und Verbindungsphase der Wagen begünstigt, ohne dass der bewegliche Teil (8) den Überhang (11) oder die Endvergrößerung (12) des Überhangs (11) stört.

6. Kupplungsvorrichtung für Reinigungswagen nach Anspruch 1, **gekennzeichnet durch** die Tatsache, dass zumindest die zweite Arbeitsposition des beweglichen Teils (8) durch ein Sicherheitselement (21) aufrechterhalten wird, das die Bewegung stört, wodurch ein unbeabsichtigtes Lösen der Kupplungsvorrichtung (7) verhindert wird.

7. Kupplungsvorrichtung für Reinigungswagen nach Anspruch 1, **gekennzeichnet durch** die Tatsache, dass das Einsteckelement (5) ein C- oder ein T-förmiges Profil umfasst, wobei der Hohlraum (14) entlang einer vertikalen Achse angeordnet ist.

8. Kupplungsvorrichtung für Reinigungswagen nach Anspruch 1, **gekennzeichnet durch** die Tatsache, dass der bewegliche Teil (8) einen Hebel umfasst, vorzugsweise von der Art eines Scharniers, und/oder an der Oberseite angelenkt und/oder an der horizontalen Drehachse (15) angelenkt ist.

9. Kupplungsvorrichtung für Reinigungswagen nach Anspruch 1, **gekennzeichnet durch** die Tatsache, dass das Einsteckelement (5) oder das Aufnahmeelement (6) der Kupplungsvorrichtung (7) aus mindestens einem oberen und/oder unteren Anschlag bestehen, um den Bewegungsweg um die vertikale Achse des Freiheitsgrades der Verbindung zwischen den Elementen (5, 6) zu begrenzen.

10. Kupplungsvorrichtung für Reinigungswagen nach Anspruch 1, **gekennzeichnet durch** die Tatsache, dass das Aufnahmeelement (6) aus einem hohlen Gehäuse (9) besteht, das das Einsteckelement (5) oder einen Teil davon halten kann, innerhalb dessen zumindest der Überhang (11) oder zumindest die Endvergrößerung (12) während der Kopplung mit dem beweglichen Teil (8) erhalten bleibt.

11. Kupplungsvorrichtung für Reinigungswagen nach Anspruch 1, **gekennzeichnet durch** die Tatsache, dass die Höhe des konkaven Gehäuses (9) oder der Abstand zwischen den oberen und unteren Anschlägen es auch erlaubt, zwischen verschiedenen Wagen (1) zu verbinden, wobei eventuelle kleine Unterschiede in den Größen des Durchmessers der Räder (3), mit denen sie ausgestattet sind, ausgeglichen werden oder in jedem Fall die Veränderung der Position kompensiert wird, bei der die jeweiligen Verbindungselemente (5, 6) am Umfang der Wagen (1) angeordnet sind, wodurch sie sich verbinden können.

12. Kupplungsvorrichtung für Reinigungswagen nach Anspruch 1, **gekennzeichnet durch** die Tatsache, dass die genannte Verbindung zwischen dem Einsteckelement (5) und dem Aufnahmeelement (6) geringfügig lose ist, was geringfügige Drehbewegungen relativ zu den beiden Elementen (5, 6) ermöglicht und folglich geringfügige Drehungen zwischen den beiden verbundenen Wagen (1) ermöglicht, um zu drehen, um raue oder unebene Böden oder Steigungen im Boden zu überwinden.

13. Kupplungsvorrichtung für Reinigungswagen nach Anspruch 1, **gekennzeichnet durch** die Tatsache, dass das Einsteck- (5) und Aufnahmeelement (6) fest, aber abnehmbar am Umfang der Wagen (1) befestigt sind, vorzugsweise und letztendlich als Paare gesichert, die in einer spiegelsymmetrischen Weise bezüglich einer vertikalen Symmetrieachse beabstandet sind oder in jedem Fall oben und unten an den Spitzen eines Polygons und vorzugsweise eines Vierecks befestigt sind.

14. Kupplungsvorrichtung für Reinigungswagen nach Anspruch 1, **gekennzeichnet durch** die Tatsache, dass im Falle des Einbaus von 2 oder 4 symmetrisch und/oder spiegelartig zur vertikalen Achse angeordneten Vorrichtungen zur Verbindung der beiden Wagen (1), die Vorgänge zum Bewegen des beweglichen Teils (8) von der Außenseite des aus den beiden Elementen (5, 6) oder von den beiden Wagen (1) zusammengesetzten Umfangsprofils erfolgen.

15. Kupplungsvorrichtung für Reinigungswagen nach Anspruch 1, **gekennzeichnet durch** die Tatsache, dass sowohl der Einbau als auch die Entnahme von jedem Einsteck- (5) und Aufnahmeelement (6) aus denen die Anschlussvorrichtung (7) besteht, werkzeuglos und manuell vom Bediener eingebaut und abgenommen werden kann, da jedes Einsteck-(5) und Aufnahmeelement (6) an einer oder mehreren freien Seiten in Bezug auf die Verbindungsseite mit einem Anschlag ausgestattet ist, der mit den jeweiligen genuteten Kupplungen (16), mit denen der Ständer (14) ausgestattet ist, verbunden ist oder darin eingesetzt ist, oder in jedem Fall an den Umfangswänden des Standardwagens (1) bis zur Überwindung einer Störung eines Störungseingriffs (18), die ein unbeabsichtigtes Herausziehen verhindert, vorhanden ist, da diese Störung nach dem Öffnungsmanöver durch den Bediener begrenzt oder unwichtig ist, der auf eine bestimmte Auslösevorrichtung einwirkt, die die Einsteckelemente (5) und die Aufnahmeelemente (6) freilässt, um sich zu lösen oder freilässt, um auf den genuteten Kupplungen (16) entgegengesetzt zu gleiten, bis sie sich lösen.

## Revendications

1. Dispositif d'accrochage pour des chariots de nettoyage comprenant au moins un premier élément mâle (5) et un second élément femelle (6) attachés ensemble sur le périmètre externe desdits chariots (1), ces éléments , mâle (5) et femelle (6), sont liés entre eux pour retenir au moins deux desdits chariots (1) pour le nettoyage , l'élément mâle (5) du dispositif d'accrochage (7) étant fixé au premier chariot (1) en position correspondante à l'élément femelle (6), fixé au second chariot (1), et ledit élément mâle (5) étant doté d'au moins un bosselage (11) avec élargissement terminal (12) et ledit élément femelle (6) étant pourvu d'une partie mobile (8) en mesure d'assumer une première position de repos éloignée dudit élément mâle (5) et une seconde position de travail associée audit élément mâle (5), avec ladite partie mobile (8) coopérant avec ledit élargissement terminal (12) pour empêcher l'éloignement des deux dits chariots (1) de nettoyage, caractérisé du fait que ledit lien entre l'élément mâle (5) et l'élément femelle (6) du dispositif d'accrochage (7) leur consente au moins une certaine liberté entre eux , le long de l'axe vertical, consentant aux deux chariots (1) de pouvoir s'unir tout en maintenant ceux-ci à une distance assez fixe par rapport à l'axe horizontal, et leur permettant le mouvement réciproque le long de l'axe vertical.

2. Dispositif d'accrochage pour des chariots de nettoyage selon la revendication 1 **caractérisé par le fait que** l'élément femelle (6), et plus particulièrement ladite partie mobile (8) de l'élément femelle, interagisse avec l'élargissement terminal (12) de bosselage (11) de l'élément mâle (5), de manière à consentir, dans la première situation ou condition de repos, le dépassement ou la traversée de la partie mobile (8) librement et sans obstacle de la part de l'élément mâle (5), et dans la seconde situation ou condition de travail, d'empêcher le mouvement de retour pour la déconnexion, dans un sens contraire à celui de la connexion, consentant malgré tout, dans cette seconde situation, une liberté de mouvement relative entre l'élément mâle (5) et l'élément femelle (6), avec un sens de mouvement orthogonal par rapport au sens de mouvement de déconnexion.

3. Dispositif d'accrochage pour des chariots de nettoyage selon la revendication 1 **caractérisé par le fait que** ladite association résulte possible avec un désalignement appréciable de niveau entre l'élément mâle (5) et l'élément femelle (6) du dispositif d'accrochage (7).

4. Dispositif d'accrochage pour des chariots de nettoyage selon la revendication 1 **caractérisé par le fait qu'**au moins un desdits éléments (5,6) est configuré à centrage automatique pour favoriser l'association réciproque avec le centrage durant rapprochement, ayant ou l'élément femelle (6) un siège (9) avec des plans inclinés (10) pour s'associer à l'élément mâle (5) ou le bosselage (11) de l'élément mâle (5), ou son élargissement terminal (12), des parois latérales (13) avec un profil qui présente une contracture.

5. Dispositif d'accrochage pour des chariots de nettoyage selon la revendication 1 **caractérisé par le fait qu'**au moins ladite première position de repos de la partie mobile (8) est maintenue par une saillie (20) qui crée une interférence au mouvement, favorisant la phase d'approchement et d'union entre les chariots, sans que la partie mobile (8) interfère avec le bosselage (11) ou l'élargissement terminal (12) du bosselage (11).

6. Dispositif d'accrochage pour des chariots de nettoyage selon la revendication 1 **caractérisé par le fait qu'**au moins ladite seconde position de travail de la partie mobile (8) est maintenue par un élément de sécurité (21) qui crée une interférence au mouvement évitant déconnections accidentelles du dispositif d'union (7).

7. Dispositif d'accrochage pour des chariots de nettoyage selon la revendication 1 **caractérisé par le fait que** ledit élément mâle (5) comprenne un profil à C ou à T avec une cavité (14) placée selon un axe vertical.

8. Dispositif d'accrochage pour des chariots de nettoyage selon la revendication 1 **caractérisé par le fait que** ladite partie mobile (8) comprenne un levier, préférablement à charnière, et/ou supérieure, et/ou à axe de rotation horizontale (15).

9. Dispositif d'accrochage pour des chariots de nettoyage selon la revendication 1 **caractérisé par le fait que** ledit élément mâle (5) ou ledit élément femelle (6) du dispositif d'union (7) comprenne au moins une butée supérieure et/ou inférieure pour limiter l'amplitude du mouvement selon l'axe vertical du degré de liberté de liaison d'association entre lesdits éléments (5, 6).

10. Dispositif d'accrochage pour des chariots de nettoyage selon la revendication 1 **caractérisé par le fait que** l'élément femelle (6) comprenne un siège (9) cavité en mesure d'accueillir ledit élément mâle (5) ou partie de celui-ci, à l'intérieur de laquelle au moins le bosselage (11) ou au moins l'élargissement terminal (12) soit retenu durant l'association avec la partie mobile (8).

11. Dispositif d'accrochage pour des chariots de nettoyage selon la revendication 1 **caractérisé par le fait que** la hauteur dudit siège (9) cavité ou la distance entre les butées supérieures et inférieures consente l'association aussi entre les divers chariots (1) tout en compensant d'éventuelles différences, cependant limitées, telle la dimension du diamètre des roues (3) dont ils sont équipés ou de toute façon en compensant la variation de niveau à laquelle les éléments d'union (5, 6) sont disposés sur le périmètre des chariots (1), consentant ainsi l'association relative.

12. Dispositif d'accrochage pour des chariots de nettoyage selon la revendication 1 **caractérisé par le fait que** ladite association entre éléments mâles (5) et éléments femelles (6) soit légèrement lâche consentant de modestes rotations relatives entre les deux éléments (5, 6) et en conséquence, consentant de modestes rotations relatives entre les deux dits chariots (1) reliés, pour réussir à surmonter les aspérités, dénivellations ou inclinations du sol.

13. Dispositif d'accrochage pour des chariots de nettoyage selon la revendication 1 **caractérisé par le fait que** lesdits éléments mâle (5) et femelle (6) sont fixés de manière solidaire mais amovible sur le périmètre desdits chariots (1), préférablement accouplés à distance et éventuellement fixés accouplés de manière spéculaire par rapport à un axe de symétrie vertical ou fixés quand même supérieurement et inférieurement aux sommets d'un polygone et de préférence d'une tétragone.

14. Dispositif d'accrochage pour des chariots de nettoyage selon la revendication 1 **caractérisé par le fait que** dans le cas de l'installation de 2 ou 4 dispositifs placés de manière symétrique et/ou spéculaire par rapport à l'axe vertical pour l'union de deux chariots (1), les opérations de mouvement de la partie mobile (8) adviennent en agissant de l'extérieur du profil périmétral constitué des deux éléments (5, 6) ou des deux chariots (1).

15. Dispositif d'accrochage pour des chariots de nettoyage selon la revendication 1 **caractérisé par le fait que** soit l'installation soit le démontage de chaque élément mâle (5) et femelle (6) qui compose le dispositif d'union (7) puisse être installé et enlevé sans outil mais manuellement par l'opérateur, étant chaque élément mâle (5) et femelle (6) muni, sur un ou plusieurs côtés libres par rapport à ceux de l'association , d'un assemblage (17) muni de butée qui s'associe ou s'insère, enfilé dans les clabots cannelés respectifs (16) dont le montant (4) est muni ou de toute façon présent sur les parois périmétrales d'un chariot quelconque (1) jusqu'au franchissement de l'interférence d'une dent interférentielle (18) qui empêche le décrochage accidentel, étant ladite interférence limitée ou rendue sans influence à la suite de la manoeuvre de l'opérateur qui actionne un moyen de dégagement approprié et conçu pour permettre aux éléments mâle (5) et femelle (6) de se décrocher ou de glisser en sens inverse sur les clabots cannelés et se libérer.
